# EUROPEAN PATENT SPECIFICATION

(11) **EP 0 963 903 B1**
(45) Date of publication and mention of the grant of the patent: **12.07.2006**
(21) Application number: 99850093.8
(22) Date of filing: 27.05.1999
(51) Int. Cl.: B62D 55/00, B62D 21/11, F41H 7/04, B62D 21/10

(54) **Tracked vehicle and frame unit therefor**
Kettenfahrzeug und Rahmeneinheit dafür
Véhicule à chenille et chassis correspondant

(30) Priority: 09.06.1998 SE 9802035
(43) Date of publication of application: 15.12.1999
(73) Proprietor: BAE Systems Hägglunds Aktiebolag, 891 82 Örnsköldsvik (SE)
(72) Inventor: Falk, Alfons, 891 78 Bonässund (SE)
(74) Representative: Winblad, Hans Peter

(56) References cited:
- EP-A- 0 723 905
- EP-A- 0 828 134
- US-A- 4 514 007
- OGORKIEWICZ R M: "ARMOURED VEHICLES OF COMPOSITE MATERIALS" INTERNATIONAL DEFENSE REVIEW, JANE'S INFORMATION GROUP, COULSDON, SURREY, GB, vol. 22, no. 7, 1 July 1989 (1989-07-01), pages 969-970, XP000068343 ISSN: 0020-6512

## Description

The present invention relates to a tracked vehicle which comprises a frame unit and, arranged on two opposite sides of the frame unit, track sets with driving wheels, pendulum arm-mounted support wheels and track-tensioning wheels for active interaction with the inside of a respective endless driving track, and also comprises a separate hull unit which is connected to the frame unit (see, for example, EP 0 723 905).

In many conventional armoured tracked vehicles for military purposes, the track sets of the vehicle are mounted directly in bearing side walls of the hull of the tracked vehicle, which means that great track-set forces and thus vibrations must be absorbed by a sturdy and heavy hull construction.

In another known type of tracked vehicle, the track sets have their own elongate support frames which are connected to the sides of the vehicle hull via vibration-damping elements (see, for example, DE 3 725 920 and EP 0 479 016). Such vehicles have a relatively low height at the expense of the width of the vehicle, which is relatively great. It is common to both known types of tracked vehicle that the bottom or underside of the hull must be of very sturdy design so as to be capable of constituting good protection against mines for the vehicle.

In another type of tracked vehicle (see, for example, SE-B-390 522), the side beams of the track sets are connected to a common frame in the form of a longitudinal central beam via transverse plate springs, the central beam supporting a separate vehicle body via vibration-damping elements. This central frame does not of course have the function of protection against mines.

An object of the present invention is to provide a tracked vehicle of the type referred to in the introduction, in which the track sets of the vehicle can be mounted in a stable and vibration-damped manner in a common frame unit which is separate from the vehicle body (the hull) and is designed so as to be capable of absorbing the forces originating from the track sets and at the same time of supporting an overlying hull with further vibration-damping and in a manner affording protection against mines for the vehicle hull.

To this end, the tracked vehicle according to the present invention is characterized by the features of claim 1. By means of such a fundamental construction of the tracked vehicle with an essentially flat, underlying frame unit in which the track sets are mounted, on the one hand effective vibration-damping of the supported hull in at least two stages is made possible, and on the other hand the construction of the hull can be thinner and lighter as the latter does not have to absorb loads from the track sets and the external environment, which affords a greater opportunity for variation of the hull to different configurations in, for example, module form; furthermore, protection against mines is also made possible for the bottom part of the hull for a very small increase in the construction height of the vehicle.

The invention also relates to the frame unit itself for a tracked vehicle for supporting parallel track sets located at the sides of the vehicle. According to the invention, the frame unit is thus characterized by the features of claim 8.

Further features of the tracked vehicle and the frame unit respectively according to the invention are indicated in the dependent patent claims below.

The invention is described in greater detail below with reference to appended drawings, in which:
Fig. 1 is a diagrammatic side view of a tracked vehicle according to the invention;
Fig. 2 is a diagrammatic end view of the tracked vehicle in Fig. 1;
Fig. 3 is an exploded view in perspective of a bottom plate and a hull for the tracked vehicle according to the invention;
Fig. 4 is a diagrammatic perspective view of a bottom plate with a track set mounted thereon;
Fig. 5 is a diagrammatic end view of a tracked vehicle according to the invention with a modified bottom plate, and
Fig. 6 is a partial detailed view of the bottom plate in Fig. 5 with a torsion element accommodated therein for the pendulum arms of the track sets, which arms bear the support wheels.

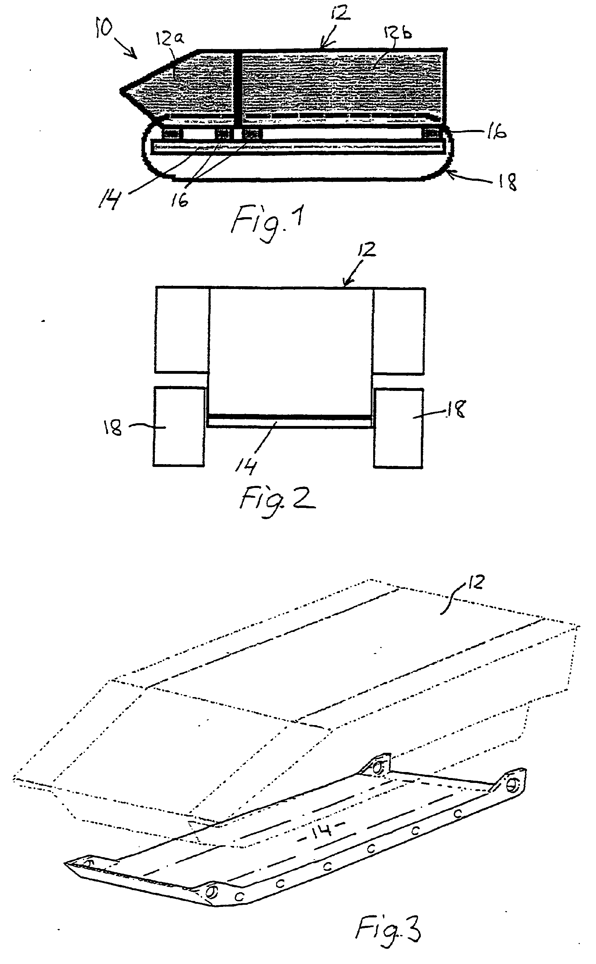

Fig. 1 shows diagrammatically in side view the fundamental construction of a tracked vehicle 10 according to the present invention. The vehicle 10 comprises a hull or body 12 which is supported on an underlying frame unit 14 in the form of a rigid bottom plate which covers essentially the entire underside of the hull 12 and supports the latter via vibration-damping members 16, such as rubber and/or spring elements, designed to damp disturbance from the driving tracks of the vehicle. In the exemplary embodiment shown, the hull 12 is of modular construction and has two separate module sections, namely a front driver and engine module 12a and a rear load-carrying module 12b. The hull modules may be made so as to be easily exchangeable, and so the same bottom frame plate can be used for an entire family of differently constructed tracked vehicles.

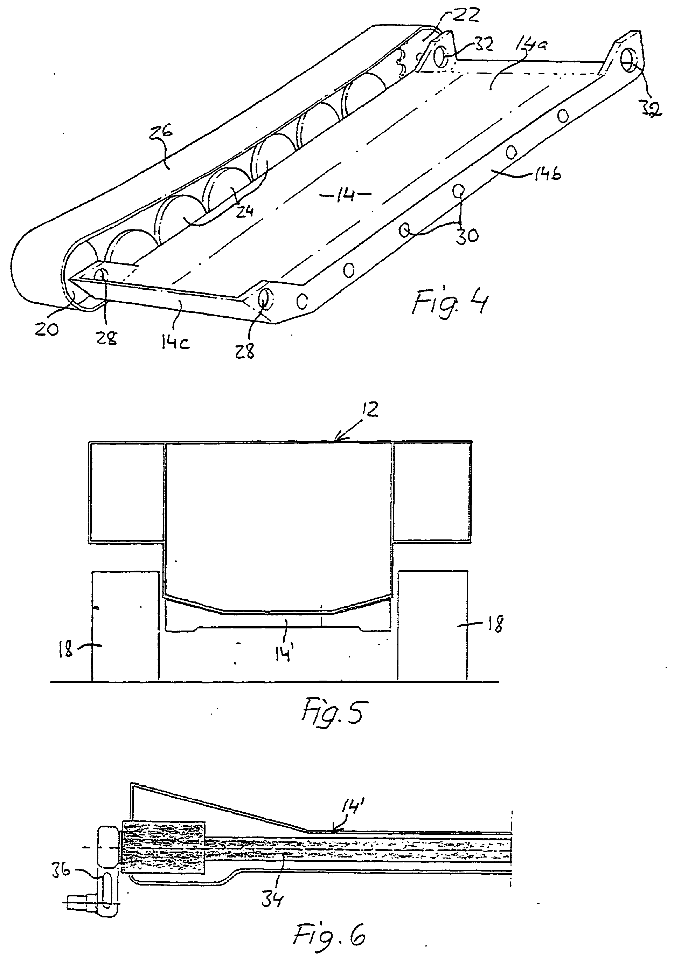

The tracked vehicle 10 also comprises two track sets 18 which are arranged along the sides of the vehicle and, as indicated in the diagrammatic end view of the vehicle 10 in Fig. 2, are mounted in the opposite longitudinal side edges of the bearing bottom plate 14. The track sets 18 comprise in a known manner driving wheels 20, tensioning wheels 22 and a number of pendulum arm-mounted support wheels 24 for active interaction with the inside of a respective endless driving track 26, as shown diagrammatically in Fig. 4.

As shown in greater detail in Figs 3 and 4, the bottom plate 14 may have a relatively plane bottom wall 14a with upwardly extending side edges 14b and front edge 14c, the side edges 14b having holes 28 for mounting driving-wheel axles, holes 30 for mounting the pivoting axles of the pendulum arms, and holes 32 for mounting rear tensioning-wheel axles. The holes 28, 30 and 32 can then be provided with rubber bushings (not shown) in order to reduce the transmission of vibrations to the bottom plate from the track sets 18. The engine of the vehicle can be mounted in a vibration-damped manner on the bottom plate 14 via lead-ins in the bottom (not shown) of the hull 12.

In a suitable embodiment, as shown diagrammatically in Figs 5 and 6, the bottom plate can be designed as a relatively flat box construction 14' so as to delimit a hollow space in order to accommodate in a protective manner inter alia elongate, transverse torsion-spring elements 34 which connect opposite pairs of support wheel-bearing pendulum arms 36 on the sides of the bottom plate 14'.

According to a preferred embodiment of the invention, the bottom plate 14, 14' of the tracked vehicle 10 is made in the form of a shield providing protection against mines for the overlying hull 12 of the tracked vehicle and can for this purpose contain suitable ceramic metals and/or fibre composites. According to the invention, it is thus proposed that the frame of the vehicle is formed by a rigid, bearing bottom plate which is intended on the one hand to be capable of absorbing all the forces originating from the track sets of the vehicle and on the other hand to cover in a manner affording protection against mines essentially the entire underside of a separate hull supported by the bottom plate, by means of which effective vibration insulation can be made possible between the hull and the bottom plate as well as between the track sets and the bottom plate. The supported hull or hull modules can then be made relatively thin-walled and light and moreover so as to be exchangeably mountable on the bottom plate, it being possible to use a common bearing bottom plate for different types of tracked vehicle.

## Claims

1. Tracked vehicle comprising a frame unit (14; 14') and, arranged on two opposite sides of the frame unit, track sets (18) with driving wheels (20), pendulum arm-mounted support wheels (24) and track-tensioning wheels (22) for active interaction with the inside of a respective endless driving track (26), and also comprising a separate hull unit (12) which is connected to the frame unit (14; 14'), **characterized in that** the frame unit comprises a rigid, bearing bottom plate (14; 14') which is designed to cover essentially the entire underside of the separate hull unit (12) and support the latter via vibration-damping fastening members (16), and that axles for the driving and tensioning wheels (20, 22) and the pendulum arms (36), which form part of the track sets (18), are mounted in holes (28, 30, 32) in opposite, upwardly extending side edges (14b) of the bottom plate (14; 14') via vibration-damping bearing members.

2. Tracked vehicle according to Claim 1, **characterized in that** the vibration-damping members contain rubber.

3. Tracked vehicle according to Claim 1 or 2, **characterized in that** the bottom plate (14') delimits a hollow space for accommodating transverse torsion-spring elements (34) for the pendulum arms (36) of the support wheels (24).

4. Tracked vehicle according to any one of Claims 1-3, **characterized in that** the bottom plate (14; 14') is designed as protection against mines.

5. Tracked vehicle according to any one of Claims 1-4, **characterized in that** the bottom plate (14; 14') contains ceramic metals.

6. Tracked vehicle according to any one of Claims 1-5, **characterized in that** the bottom plate (14; 14') contains fibre composites.

7. Tracked vehicle according to any one of Claims 1-6, **characterized in that** the hull unit (12) comprises one or more separate module sections (12a, 12b).

8. Frame unit (14; 14'), intended for a tracked vehicle (10), for supporting parallel track sets (18) located at the sides of the vehicle, **characterized in that** the frame unit (14; 14) comprises a rigid, bearing bottom plate (14; 14') which is designed to cover essentially the entire underside of a separate hull unit (12) and support the latter via vibration-damping fastening members (16), and that axles for the driving and tensioning wheels (20, 22) and the pendulum arms (36), which form part of the track sets (18), are mounted in holes (28, 30, 32) in opposite, upwardly extending side edges (14b) of the bottom plate (14; 14') via vibration-damping bearing members.

9. Frame unit according to Claim 8, **characterized in that** the bottom plate (14') delimits a hollow space for accommodating transverse torsion-spring elements (34) for the pendulum arms (36) of the support wheels (24).

10. Frame unit according to Claim 8 or 9, **characterized in that** the bottom plate (14; 14') is designed as protection against mines.

11. Frame unit according to any one of Claims 8-10, **characterized in that** the bottom plate (14; 14') contains ceramic metals.

12. Frame unit according to any one of Claims 8-11, **characterized in that** the bottom plate (14; 14') contains fibre composites.

## Patentansprüche

1. Kettenfahrzeug mit einer Rahmeneinheit (14, 14') und, angeordnet auf zwei gegenüberliegenden Seiten der Rahmeneinheit, Kettensätze (18) mit Antriebsrädem (20), an Pendelarmen befestigten Stützrädern (24) und Kettenspannrädem (22) für die aktive Wechselwirkung mit dem Inneren einer entsprechenden End-Iosantriebskette (26), und ebenfalls umfassend eine getrennte Panzerungseinheit (12), die mit der Rahmeneinheit (14; 14') verbunden ist, **dadurch gekennzeichnet, dass** die Rahmeneinheit eine starre, tragende Bodenplatte (14; 14') umfasst, die so ausgelegt ist, dass sie im Wesentlichen die gesamte Unterseite der getrennten Panzerungseinheit (12) bedeckt und die Letztere über schwingungsdämpfende Befestigungselemente (16) stützt, und dass Achsen für die Antriebs- und Spannräder (20, 22) und die Pendelarme (36), die einen Bestandteil der Kettensätze (18) bilden, in Löchern (28, 30, 32) in entgegengesetzten, sich nach oben erstreckenden Seitenkanten (14b) der Bodenplatte (14; 14') über schwingungsdämpfende Tragelemente befestigt sind.

2. Kettenfahrzeug nach Anspruch 1, **dadurch gekennzeichnet, dass** die schwingungsdämpfenden Elemente Gummi enthalten.

3. Kettenfahrzeug nach Anspruch 1 oder 2, **dadurch gekennzeichnet, dass** die Bodenplatte (14') einen Hohlraum für die Aufnahme von quer verlaufenden Torsionsfederelementen (34) für die Pendelarme (36) der Stützräder (24) begrenzt.

4. Kettenfahrzeug nach irgendeinem der Ansprüche 1 - 3, **dadurch gekennzeichnet, dass** die Bodenplatte (14; 14') als ein Schutz gegen Minen ausgelegt ist.

5. Kettenfahrzeug nach irgendeinem der Ansprüche 1 - 4, **dadurch gekennzeichnet, dass** die Bodenplatte (14,14') keramische Metalle enthält.

6. Kettenfahrzeug nach irgendeinem der Ansprüche 1 - 5, **dadurch gekennzeichnet, dass** die Bodenplatte (14;14') Faser-Verbundstoffe enthält.

7. Kettenfahrzeug nach irgendeinem der Ansprüche 1 - 6, **dadurch gekennzeichnet, dass** die Panzerungseinheit (12) einen oder mehrere getrennte Modulabschnitte (12a, 12b) umfasst.

8. Rahmeneinheit (14; 14'), vorgesehen für ein Kettenfahrzeug (10) zum Unterstützen von parallelen Kettensätzen (18), die sich an den Seiten des Fahrzeugs befinden, **dadurch gekennzeichnet, dass** die Rahmeneinheit (14, 14') eine starre, tragende Bodenplatte (14, 14') umfasst, die so ausgelegt ist, dass sie im Wesentlichen die gesamte Unterseite einer getrennten Panzerungseinheit (12) bedeckt und die Letztere über schwingungsdämpfende Befestigungselemente (16) stützt, und dass Achsen für die Antriebs- und Spannräder (20, 22) und die Pendelarme (36), die einen Bestandteil der Kettensätze (18) bilden, in Löchern (28, 30, 32) in entgegengesetzten, sich nach oben erstreckenden Seitenkanten (14b) der Bodenplatte (14; 14') über schwingungsdämpfende Tragelemente befestigt sind.

9. Rahmeneinheit nach Anspruch 8, **dadurch gekennzeichnet, dass** die Bodenplatte (14') einen Hohlraum für die Aufnahme von quer verlaufenden Torsionsfederelementen (34) für die Pendelarme (36) der Stützräder (24) begrenzt.

10. Rahmeneinheit nach Anspruch 8 oder 9, **dadurch gekennzeichnet, dass** die Bodenplatte (14, 14') als ein Schutz gegen Minen ausgelegt ist.

11. Rahmeneinheit nach irgendeinem der Ansprüche 8 - 10, **dadurch gekennzeichnet, dass** die Bodenplatte (14, 14') keramische Metalle enthält.

12. Rahmeneinheit nach irgendeinem der Ansprüche 8 - 11, **dadurch gekennzeichnet, dass** die Bodenplatte (14, 14') Faser-Verbundstaffe enthält.

## Revendications

1. Véhicule à chenilles comportant une unité formant châssis (14 ; 14') et, agencés sur deux côtés opposés de l'unité formant châssis, des ensembles de chenille (18) munis de roues motrices (20), de roues de support montées sur bras pendulaire (24) et de roues de tension de chenilles (22) pour une interaction active avec l'intérieur d'une chenille d'entraînement sans fin respective (26), et comportant également une unité formant coque séparée (12) qui est reliée à l'unité formant châssis (14 ; 14'), **caractérisé en ce que** l'unité formant châssis comporte une plaque inférieure de support rigide (14 ; 14') qui est conçue pour couvrir essentiellement tout le côté inférieur de l'unité formant coque séparée (12), et pour supporter cette dernière via des éléments de fixation amortisseurs de vibrations (16), et **en ce que** des essieux pour les roues motrices et de tension (20, 22) et les bras pendulaires (36), formant une partie des ensembles de chenille (18), sont montés dans des trous (28, 30, 32) dans des bords latéraux opposés s'étendant vers le haut (14b) de la plaque inférieure (14 ; 14') via des éléments de support amortisseurs de vibrations.

2. Véhicule à chenilles selon la revendication 1, **caractérisé en ce que** les éléments amortisseurs de vibrations contiennent du caoutchouc.

3. Véhicule à chenilles selon la revendication 1 ou 2, **caractérisé en ce que** la plaque inférieure (14') délimite un espace creux pour recevoir des éléments formant ressort de torsion transversaux (34) pour les bras pendulaires (36) des roues de support (4).

4. Véhicule à chenilles selon l'une quelconque des revendications 1 à 3, **caractérisé en ce que** la plaque inférieure (14 ; 14') est conçue sous la forme d'une protection contre les mines.

5. Véhicule à chenilles selon l'une quelconque des revendications 1 à 4, **caractérisé en ce que** la plaque inférieure (14 ; 14') contient des cermets.

6. Véhicule à chenilles selon l'une quelconque des revendications 1 à 5, **caractérisé en ce que** la plaque inférieure (14 ; 14') contient des composites de fibres.

7. Véhicule à chenilles selon l'une quelconque des revendications 1 à 6, **caractérisé en ce que** l'unité formant coque (12) comporte un ou plusieurs tronçons de module séparés (12a, 12b).

8. Unité formant châssis (14 ; 14'), prévue pour un véhicule à chenilles (10), pour supporter des ensembles de chenille parallèles (18) positionnés au niveau des côtés du véhicule, **caractérisée en ce que** l'unité formant châssis (14 ; 14') comporte une plaque inférieure de support rigide (14 ; 14') qui est conçue pour couvrir essentiellement tout le côté inférieur d'une unité formant coque séparée (12), et pour supporter cette dernière via des éléments de fixation amortisseurs de vibrations (16), et **en ce que** des essieux pour les roues motrices et de tension (20, 22) et les bras pendulaires (36), formant une partie des ensembles de chenille (18), sont montés dans des trous (28, 30, 32) dans des bords latéraux opposés s'étendant vers le haut (14b) de la plaque inférieure (14 ; 14') via des éléments de support amortisseurs de vibrations.

9. Unité formant châssis selon la revendication 8, **caractérisée en ce que** la plaque inférieure (14') délimite un espace creux pour recevoir des éléments formant ressort de torsion transversaux (34) pour les bras pendulaires (36) des roues de support (24).

10. Unité formant châssis selon la revendication 8 ou 9, **caractérisée en ce que** la plaque inférieure (14 ; 14') est conçue sous la forme d'une protection contre les mines.

11. Unité formant châssis selon l'une quelconque des revendications 8 à 10, **caractérisée en ce que** la plaque inférieure (14 ; 14') contient des cermets.

12. Unité formant châssis selon l'une quelconque des revendications 8 à 11, **caractérisée en ce que** la plaque inférieure (14 ; 14') contient des composites de fibres.
